# EUROPÄISCHE PATENTSCHRIFT

(11) **EP 1 204 929 B1**
(45) Veröffentlichungstag und Bekanntmachung des Hinweises auf die Patenterteilung: **28.01.2004**
(21) Anmeldenummer: 00954388.5
(22) Anmeldetag: 02.08.2000
(51) Int. Cl.: G06F 15/173, G06F 15/167

(54) **MULTIPROZESSOR-SYSTEM**
MULTIPROCESSOR SYSTEM
SYSTEME MULTIPROCESSEUR

(30) Priorität: 06.08.1999 DE 19937176
(43) Veröffentlichungstag der Anmeldung: 15.05.2002
(73) Patentinhaber: SIEMENS AKTIENGESELLSCHAFT, 80333 München (DE)
(72) Erfinder: HASLINGER, Johann, D-85386 Eching (DE)
(86) Internationale Anmeldenummer: PCT/DE2000/002573
(87) Internationale Veröffentlichungsnummer: WO 2001/011481

(56) Entgegenhaltungen:
- WO-A-97/30399
- US-A- 4 912 698
- US-A- 5 247 637
- US-A- 5 594 876
- US-A- 5 761 455
- US-A- 5 870 572

## Beschreibung

Die Erfindung bezieht sich auf ein Multiprozessor-System, bestehend aus einer Anzahl n von Prozessoren und einem diesen Prozessoren zugeordneten gemeinsamen Arbeitsspeicher sowie mit einem den Zugriff der Prozessoren auf den Arbeitsspeicher ermöglichenden Bussystem.

Multiprozessor-Systeme dieser Art werden auf vielen Gebieten verwendet, so unter anderem auch in Koordinationsprozessoren von Sprachvermittlungsanlagen, z.B. des EWSD-Systems der Anmelderin. Die Prozessoren und der Arbeitsspeicher, die sich auch auf verschiedenen Baugruppen befinden können, stehen über einen parallelen Bus miteinander in Verbindung, wobei das Bussystem in vielen Fällen einen "Flaschenhals" für die Leistungsfähigkeit des Systems darstellt.

US-A-5,247,637 betrifft ein Multiprozessor-System nach dem Oberbegriff des Anspruchs 1, bei dem der Arbeitsspeicher in acht Sektionen aufgeteilt ist und jeder Prozessor mit jeder der Sektionen über einen parallelen (195 Bit breiten) Bus verbunden ist.

Während sich die Leistungsfähigkeit des Speichers durch schnellere Speicherbausteine und/oder zusätzliche parallel arbeitende Speicherbanken und jene des Prozessors durch höhere Taktfrequenzen vergleichsweise einfach steigern läßt, trifft dies nicht für des Bussystem zu, da die Geschwindigkeit des Bussystems durch die mechanischen Abmessungen, kapazitive Lasten, etc., beschrankt ist. Die Bandbreite eines Busses kann durch Erhöhung der Taktfrequenz oder Verbreiterung des Busses, z.B. von 16 auf 32 Bit, gesteigert werden, doch stößt man hier oft an elektrische und mechanische Grenzen.

Es ist somit eine Aufgabe der Erfindung, ein Multiprozessor-System zu schaffen und dabei die Problematik des Bussystems mit erhöhter Leistungsfähigkeit zu entschärfen.

Diese Aufgabe läßt sich mit einem Multiprozessor-System der eingangs genannten Art lösen, bei welchem erfindungsgemäß der Arbeitsspeicher mit jedem Prozessor über je eine bidirektionale serielle Leitung verbunden ist.

Dank der Erfindung erreicht man eine höhere Bus- und damit auch Speicher-Bandbreite je Prozessor, da z.B. die kapazitiven Lasten geringer sind. Weiters verringern sich die mechanischen Abmessungen der Interfaces.

Eine vorteilhafte Variante der Erfindung zeichnet sich dadurch aus, daß der gemeinsame Arbeitsspeicher auf eine Anzahl r Speicherbaugruppen verteilt ist, wobei jede Speicherbaugruppe über eine bidirektionale serielle Leitung mit jedem Prozessor verbunden ist. Auf diese Weise läßt sich die Leistungsfähigkeit weiter steigern, da die Prozessoren unabhängig voneinander auch parallel auf Baugruppen zugreifen können.

Zur Erhöhung der Sicherheit bzw. der Redundanz kann es angebracht sein, wenn jede Speicherbaugruppe doppelt ausgebildet ist, wobei jeder Prozessor über je eine serielle Leitung sowohl mit jeder Speicherbaugruppe als auch mit ihrem Doppel verbunden ist.

Im Sinne einer Erhöhung der Poolredundanz ist es weiters zweckmäßig, daß die Speicherkapazität einer Baugruppe auf mehrere Speicherbanken verteilt ist. Auch auf die Speicherbanken kann unabhängig und parallel von den Prozessoren zugegriffen werden.

Bei einer vorzuziehenden Architektur, die auch sehr wartungsfundiert ist, sind die Prozessoren auf eine Anzahl p von Prozessorbaugruppen aufgeteilt, wobei mit Vorteil jede Prozessorbaugruppe die gleiche Anzahl m von Prozessoren enthält.

Eine praxisgerechte Realisierung der erwünschten hohen Datenübertragungsraten ergibt sich, falls die seriellen Leitungen als optische Leitungen ausgebildet sind.

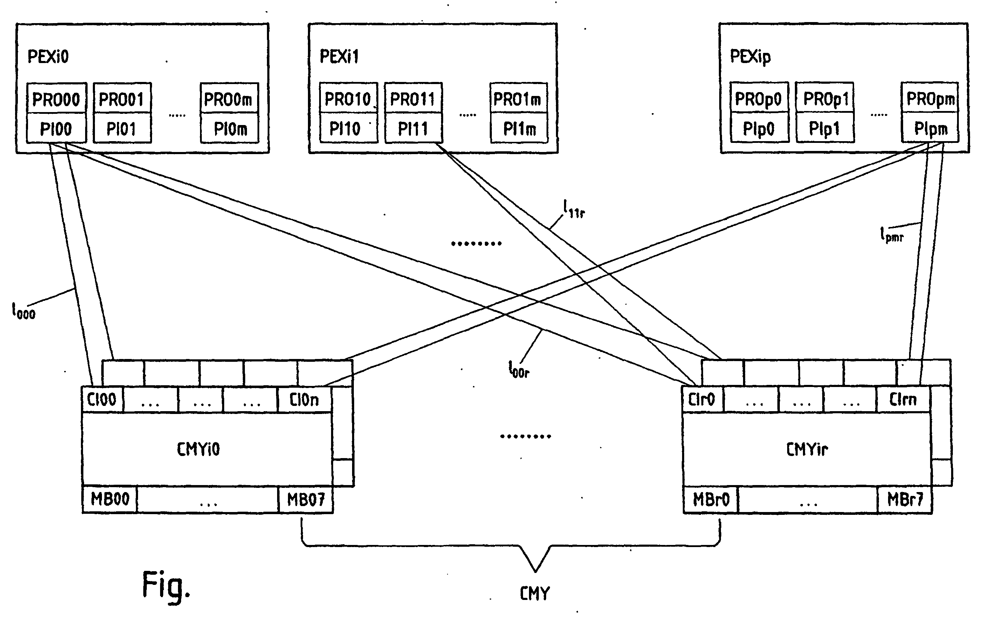

Die Erfindung samt weiterer Vorteile ist im folgenden anhand einer beispielsweisen Ausführung näher veranschaulicht, die in einer Zeichnung dargestellt ist. In dieser zeigt die einzige Figur nach Art eines Blockschaltbildes ein Multiprozessor-System nach der Erfindung.

Das dargestellte Ausführungsbeispiel eines Multiprozessor-Systems, das beispielsweise als Koordinationsprozessor in Vermittlungen von Sprachnetzen anwendbar ist, besteht aus insgesamt p x m Prozessoren PRO₀₀ ... PROₚₘ. Je m Prozessoren sind auf Prozesserbaugruppen PEXᵢ₀ ... PEXᵢₚ enthalten, z.B. auf Steckkarten, wobei insgesamt p solcher Prozessorbaugruppen vorhanden sind und demgemäß insgesamt die vorhin genannten p x m Prozessoren. Jeder dieser Prozessoren besitzt ein Prozessorinterface Pᵢ₀₀ ... Pᵢ₀ₘ bis Pᵢₚ₀ ... Pᵢₚₘ.

Für die Prozessoren steht ein Arbeitsspeicher CMY zur Verfügung und dieser Arbeitsspeicher befindet sich auf insgesamt r Speicherbaugruppen CMYᵢ₀ ... CMYᵢᵣ. Die Speicherkapazitäten der Baugruppen sind dabei auf mehrere Speicherbanken MB₀₀ ... MB₀₇ bis MBᵣ₀ ... MBᵣ₇ aufgeteilt und überdies ist jede Speicherbaugruppe gedoppelt, was in der Zeichnung durch eine dahinterliegende Karte dargestellt ist.

Jede Speicherbaugruppe CMYᵢ₀ ... CMYᵢᵣ besitzt entsprechend der Anzahl n = p x m von Prozessoren n Interfaces Cᵢ₀₀ ... Cᵢ₀ₙ bis Cᵢᵣ₀ ... Cᵢᵣₙ und von jedem Interface führt zu dem entsprechenden Interface eines Prozessors eine bidirektionale serielle Leitung, z.B. eine Leitung l₁₁ᵣ₀ von dem zweiten Prozessor der zweiten Prozessorbaugruppe zu dem ersten Interface der r-ten Speicherbaugruppe CMYᵢᵣ. Sinngemäß gilt dies natürlich auch für die Verbindung zu dem Doppel der Speicherbaugruppe.

Die gezeigte Architektur erlaubt die gleichzeitige Abwicklung von r x 8 Zugriffen auf den Speicher CMY, vorausgesetzt das System ist mit r x 8 Prozessoren ausgestattet und Zugriffe sind bezüglich der Speicherbanken und Speicherbaugruppen entsprechend verteilt.

Durch die Verteilung auf p x m Prozessoren ist auch ein rasches Speicherkopieren möglich, und der Speicherkopiervorgang kann auch auf p x m Prozessoren verteilt und damit signifikant beschleunigt werden, praktisch fast um den Faktor p x m. Ermöglicht wird dies vor allem durch die seriellen Verbindungen von jedem Prozessor zu jeder Speicherbaugruppe, und die parallele Abwicklung von bis zu acht Zyklen je Speicherbaugruppe aufgrund der Speicherbankenstruktur.

Je nach Anforderung an die Datenübertragungsraten zwischen den Prozessoren und dem Speicher wird man die bidirektionalen Leitungen wählen. Für hohe Übertragungsraten empfiehlt sich die Verwendung von optischen Leitungen mit entsprechenden Interfaces.

Wenngleich die Aufteilung des Speichers auf Speicherbaugruppen und dort auf Speicherbanken eine sehr zweckmäßige Ausführung darstellt, ist eine solche Strukturierung nicht notwendigerweise erforderlich. In der einfachsten Form können die bidirektionalen seriellen Leitungen von jedem Prozessor zu einem einzigen Speicher verlaufen, vorausgesetzt daß dessen Interface-Einheit die Verarbeitung der ein- und ausgehenden Information ermöglicht.

Die Erfindung ermöglicht eine sehr flexible Gestaltung von Multiprozessor-Systemen mit hoher Leistungsfähigkeit, wobei dennoch die mechanischen Abmessungen gering bleiben.

## Patentansprüche

1. Multiprozessor-System, bestehend aus einer Anzahl n von Prozessoren und einem diesen Prozessoren zugeordneten gemeinsamen Arbeitsspeicher sowie mit einem den Zugriff der Prozessoren auf den Arbeitsspeicher ermöglichenden Bussystem,
**dadurch gekennzeichnet,**
**daß** der Arbeitsspeicher (CMY) mit jedem Prozessor (PRO₀₀ ... PROₚₘ) über je eine bidirektionale serielle Leitung (l₀₀₀ ... lₚₘᵣ) als das Bussystem verbunden ist.

2. Multiprozessor-System nach Anspruch 1,
**dadurch gekennzeichnet, daß** der gemeinsame Arbeitsspeicher auf eine Anzahl r von Speicherbaugruppen (CMYᵢ₀ ... CMYᵢᵣ) verteilt ist, wobei jede Speicherbaugruppe über eine bidirektionale serielle Leitung mit jedem Prozessor (PRO₀₀ ... PROₚₘ) verbunden ist.

3. Multiprozessor-System nach Anspruch 2,
**dadurch gekennzeichnet, daß** jede Speicherbaugruppe (CMYᵢ₀ ... CMYᵢᵣ) doppelt ausgebildet ist, wobei jeder Prozessor (PRO₀₀ ... PROₚₘ) über je eine serielle Leitung (l₀₀₀ ... lₚₘᵣ) sowohl mit jeder Speicherbaugruppe als auch mit ihrem Doppel verbunden ist.

4. Multiprozessor-System nach Anspruch 2 oder 3,
**dadurch gekennzeichnet, daß** die Speicherkapazität einer Baugruppe (CMYᵢ₀ ... CMYᵢᵣ) auf mehrere Speicherbanken (MB00 ... MBr7) verteilt ist.

5. Multiprozessor-System nach einem der Ansprüche 1 bis 3,
**dadurch gekennzeichnet, daß** die Prozessoren (PRO₀₀ ... PROₚₘ) auf eine Anzahl p von Prozessorbaugruppen (PEXᵢ₀ ... PEXᵢₚ) aufgeteilt sind.

6. Multiprozessor-System nach Anspruch 5,
**dadurch gekennzeichnet, daß** jede Prozessorbaugruppe (PEXᵢ₀ ... PEXᵢₚ) die gleiche Anzahl m von Prozessoren enthält.

7. Multiprozessor-System nach einem der Ansprüche 1 bis 6,
**dadurch gekennzeichnet, daß** die seriellen Leitungen als optische Leitungen ausgebildet sind.

## Claims

1. Multiprocessor system, comprising a number n of processors and a common main memory assigned to these processors, and also having a bus system which enables the processors to access the main memory,
**characterized**
**in that** the main memory (CMY) is connected to each processor (PRO₀₀ ... PROₚₘ) via a respective bidirectional serial link (l₀₀₀ ... lₚₘᵣ) as the bus system.

2. Multiprocessor system according to Claim 1,
**characterized in that** the common main memory is distributed between a number r of memory modules (CMYᵢ₀ ... CMYᵢᵣ), each memory module being connected to each processor (PRO₀₀ ... PROₚₘ) via a bidirectional serial line.

3. Multiprocessor system according to Claim 2,
**characterized in that** each memory module (CMYᵢ₀ ... CMYᵢᵣ) is of double design, each processor (PRO₀₀ ... PROₚₘ) being connected both to each memory module and to its duplicate via a respective serial line (l₀₀₀ ... lₚₘᵣ).

4. Multiprocessor system according to Claim 2 or 3,
**characterized in that** the storage capacity of a module (CMYᵢ₀ ... CMYᵢᵣ) is distributed between a plurality of memory banks (MB00 ... MBr7).

5. Multiprocessor system according to one of Claims 1 to 3,
**characterized in that** the processors (PRO₀₀ ... PROₚₘ) are divided between a number p of processor modules (PEXᵢ₀ ... PEXᵢₚ).

6. Multiprocessor system according to Claim 5,
**characterized in that** each processor module (PEXᵢ₀ ... PEXᵢₚ) contains the same number m of processors.

7. Multiprocessor system according to one of Claims 1 to 6,
**characterized in that** the serial lines are designed as optical lines.

## Revendications

1. Système multiprocesseur comprenant un nombre n de processeurs et une mémoire de travail commune attribuée à ces processeurs et équipé d'un système de bus permettant l'accès des processeurs à la mémoire de travail,
**caractérisé en ce que**
la mémoire de travail (CMY) est reliée à chaque processeur (PR₀₀ ... PROₚₘ) par une ligne (l₀₀₀ ... lₚₘᵣ) série bidirectionnelle en tant que système de bus.

2. Système multiprocesseur selon la revendication 1,
**caractérisé en ce que** la mémoire de travail commune est répartie entre un nombre r d'ensembles mémoire (CMYᵢ₀ ... CMYᵢᵣ), chaque ensemble mémoire étant relié à chaque processeur (PRO₀₀ ... PROₚₘ) par une ligne série bidirectionnelle.

3. Système multiprocesseur selon la revendication 2,
**caractérisé en ce que** chaque ensemble mémoire (CMYᵢ₀ ... CMYᵢᵣ) est réalisé en double, chaque processeur (PRO₀₀ ... PROₚₘ) étant relié par une ligne série (l₀₀₀ ... lₚₘᵣ) aussi bien à chaque ensemble mémoire qu'à son double.

4. Système multiprocesseur selon la revendication 2 ou 3,
**caractérisé en ce que** la capacité de mémoire d'un ensemble (CMYᵢ₀ ... CMYᵢᵣ) est répartie entre plusieurs banques de mémoire (MBOO ... MBr7).

5. Système multiprocesseur selon l'une quelconque des revendications 1 à 3, **caractérisé en ce que** les processeurs (PRO₀₀ ... PROₚₘ) sont subdivisés entre un nombre p d'ensembles processeurs (PEXᵢ₀ ... PEXᵢₚ).

6. Système multiprocesseur selon la revendication 5,
**caractérisé en ce que** chaque ensemble processeur (PEXᵢ₀ ... PEXᵢₚ) contient le même nombre m de processeurs.

7. Système multiprocesseur selon l'une quelconque des revendications 1 à 6, **caractérisé en ce que** les lignes séries sont réalisées sous la forme de lignes optiques.
